# EUROPÄISCHE PATENTSCHRIFT

(11) **EP 3 618 147 B1**
(45) Veröffentlichungstag und Bekanntmachung des Hinweises auf die Patenterteilung: **09.11.2022**
(21) Anmeldenummer: 19185956.0
(22) Anmeldetag: 12.07.2019
(51) Int. Cl.: H01M 50/502, H01M 50/543

(54) **BATTERIEZELLE UND VERFAHREN ZUR HERSTELLUNG DERSELBEN**
BATTERY CELL AND METHOD FOR MANUFACTURING THE SAME
ÉLÉMENT DE BATTERIE ET PROCÉDÉ DE FABRICATION D'UN ÉLÉMENT DE BATTERIE

(30) Priorität: 27.08.2018 DE 102018006718
(43) Veröffentlichungstag der Anmeldung: 04.03.2020
(73) Patentinhaber: VOLKSWAGEN AKTIENGESELLSCHAFT, 38440 Wolfsburg (DE)
(72) Erfinder: Breuer, Alexander, 29227 Celle (DE); Ramm, Markus, 38104 Braunschweig (DE)
(74) Vertreter: Kirschner, Sebastian

(56) Entgegenhaltungen:
- EP-A1- 2 388 847
- EP-A1- 2 535 965

## Beschreibung

Die vorliegende Erfindung betrifft eine Batteriezelle, insbesondere für Lithium-lonen-Traktionsbatterien, insbesondere für Elektrofahrzeuge, mit den Merkmalen des Oberbegriffs des Patentanspruchs 1 sowie ein Verfahren zur Herstellung einer solchen Batteriezelle.

Im Stand der Technik sind Lithium-lonen-Traktionsbatterien bekannt, die Batteriezellen mit einem Stapel von positiven und negativen Elektroden sowie dazwischen angeordneten Separatoren umfassen, wobei die Elektroden jeweils Elektrodenfahnen aufweisen, welche jeweils mit mindestens einem positiven und mindestens einem negativen Ableiter verschweißt sind. Dieser Aufbau ist typischerweise von einem Isoliermaterial umgeben. Die Elektroden weisen jeweils Elektrodenfahnen auf, welche aus dem Stapel der Elektroden herausgeführt sind, und welche mit einem Ableiter, auch Kollektor genannt, verbunden, typischerweise verschweißt sind. Beispielhaft soll zu diesem Aufbau auf die DE 10 2011 109 237 A1 verwiesen werden. Der Aufbau ist dabei so ausgebildet, dass aus dem Stapel der positiven und negativen Elektroden und der dazwischen angeordneten Separatoren die Elektrodenfahnen des einen Pols und des anderen Pols getrennt voneinander aus dem Stapel herausragen. Diese sind dann mit einem in einer Ebene parallel zur Stapelebene angeordneten Ableiter mittels Überlappstoß verschweißt. Die Verbindung zwischen dem Kollektor und den einzelnen Elektrodenfahnen der Elektroden ist dabei für eine sichere und zuverlässige Funktionalität von entscheidender Bedeutung. Häufig wird deshalb ein Ultraschallschweißverfahren eingesetzt. Um sichere und zuverlässige Verbindungen zu realisieren, ist es nun so, dass mit sehr hohen Energien geschweißt werden muss, was die Elektroden und den Aufbau der Batteriezelle während der Fertigung stark belasten kann, und was außerdem vergleichsweise viel Energie benötigt.

In einer alternativen Ausgestaltung der Verbindung der Elektrodenfahnen zum Ableiter schlägt die EP 2 584 629 A1 vor, die Verbindung in einer Einbuchtung in dem aktiven Material der Batteriezelle vorzusehen, um so die im Bauraum benötigten Dicken des Ableiters und der Stapel der Elektrodenfahnen zu verringern.

Die US 2014/0079983 A1 beschreibt eine weitere Möglichkeit für eine gattungsbildende Batteriezelle. Die Batteriezelle umfasst ebenfalls einen Stapel von positiven und negativen Elektroden sowie dazwischen angeordneten Separatoren, wobei die Elektroden jeweils Elektrodenfahnen aufweisen, welche jeweils mit mindestens einem positiven und mindestens einem negativen Ableiter verschweißt sind. Die Ableiter sind gegenüberliegend auf verschiedenen Seite der Zelle aus einer Schutzhülle herausgeführt. Die Ableiter sind mehrlagig ausgebildet mit einer metallischen Schicht, welche zwischen jeweils einer Klebeschicht und einer nicht-leitenden Siegelschicht angeordnet ist. Dies wird dazu genutzt, dass die Siegelschicht sich gleichzeitig mit der Schutzhülle verbinden kann oder als Schutzhülle im Bereich der Durchführung des Ableiters aus der Hülle dient. Generell wird in dieser Schrift die Verbindung zwischen den Elektrodenfahnen und den Ableitern in üblicher Weise hergestellt, zum Beispiel durch Ultraschallschweißen mit Überlappstoß.

Alle bisher bekannten gattungsbildenden Batteriezellen weisen als Schweißverbindung zwischen den Elektrodenfahnen und den Ableitern Überlappbereiche auf, in denen mittels Überlappstoß die Schweißverbindung hergestellt wird.

Ein Aspekt der vorliegenden Erfindung ist es daher, eine Batteriezelle für Lithium-lonen-Traktionsbatterien zur Verfügung zu stellen, die eine verbesserte Ausnutzung des Bauraums erlaubt. Zugleich soll erreicht werden können, dass die mechanische und elektrische Stabilität der elektronischen Verbindung zwischen den Elektrodenfahnen einerseits und den Ableitern andererseits mindestens genauso gut ist wie diese Eigenschaften der bisherigen Verbindungen mittels Überlappstoß.

Aus der US 9,882,193 B2 ist eine Batteriezelle mit einem Stapel von positiven und negativen Elektroden sowie dazwischen angeordneten Separatoren bekannt, wobei die Elektroden jeweils Elektrodenfahnen aufweisen, welche jeweils mit mindestens einem positiven und mindestens einem negativen Ableiter verschweißt sind. Die Elektrodenfahnen sind mit dem Ableiter jeweils stirnseitig durch eine Stumpfstoß-Schweißnaht mittels Rührreibschweißen verbunden sind.

Figur 1 der gattungsbildenden EP 2 388 847 A1 zeigt eine Batterie, wobei nicht beschichtete Abschnitte der Elektroden mit einer Kollektorplatte, d.h. einem entsprechenden Ableiter stirnseitig verschweißt sind. Es erstreckt sich die Kollektorplatte senkrecht zur Stirnseite des Elektrodenstapels. Es ist beschrieben, dass es sich dabei um eine Stumpfschweißnaht (butt welding) handelt. Ob dieses stirnseitige Verbindung mittels Laserstrahlschweißen Elektronenstrahl-, WIG-, MIG- oder Plasmaschweißen hergestellt ist, ist nicht näher beschrieben.

Aus der EP 2 535 965 A1 ist die Verwendung von Stumpfstoßschweißen zur Verbindung mehrerer Einzelzellen zu einem Batterieverbund bekannt. Es sind mehrere Energiespeicherzellen dargestellt, die jeweils über einen Verbinder verbunden sind. Der Verbinder verbindet beispielsweise den Minuspol einer Energiespeicherzelle mit dem Pluspol einer benachbarten Energiespeicherzelle. Der Verbinder weist Durchgangslöcher auf, die über die zylindrischen Polanschlüsse der Energiespeicherzellen gesteckt werden, sodass eine formschlüssige Verbindung zwischen der Innenwand der Durchgangslöcher und der Außenwand der Polanschlüsse entsteht. Diese formschlüssige Verbindung bildet dabei Stoßbereich aus, an der mittels eines Schweißverfahrens eine Schweißnaht zum Verbinden des Verbinders und der Polanschlüsse hergestellt wird. Dieses Stumpfschweißnaht wird beispielsweise durch Laserschweißen hergestellt.

Der Erfindung liegt die Aufgabe zu Grunde, die Batteriezelle zu verbessern.

Diese Aufgabe wird erfindungsgemäß gelöst durch eine Batteriezelle mit den Merkmalen des Patentanspruchs 1.

Die Erfindung umfasst eine Batteriezelle mit einem Stapel von positiven und negativen Elektroden sowie dazwischen angeordneten Separatoren, wobei die Elektroden jeweils Elektrodenfahnen aufweisen, welche jeweils mit mindestens einem positiven und mindestens einem negativen Ableiter verschweißt sind. Es sind die Elektrodenfahnen mit dem Ableiter jeweils stirnseitig durch eine Stumpfstoß-Schweißnaht verbunden.

Als Schweißstoß wird der Bereich bezeichnet, in dem Schweißteile miteinander vereinigt werden. Es gibt verschieden Stoßarten, die in der ISO 17659 genormt sind und sich durch die konstruktive Anordnung der Werkstücke oder deren Endflächen unterscheiden. Bei einer Stumpfstoß-Schweißnaht liegen sich die Stirnseiten der zu verbindenden Werkstücke direkt gegenüber. Mit anderen Worten treffen sich die Stirnseiten der durch Schweißen zu verbindenden Teile, vorliegend die Stirnseiten der Elektrodenfahnen einerseits und die Stirnseiten der Ableiter beziehungsweise die Stirnseite des Ableiters andererseits, und die Teile liegen sich in einer Ebene gegenüber. Es gibt beim Stumpfstoß keinen Überlappungsbereich zwischen den zu verbindenden Teilen.

Vorteilhafterweise kann mit der erfindungsgemäßen Geometrie der Stumpfstoß-Schweißnaht zur Verbindung der Elektrodenfahnen mit dem beziehungsweise mit den Ableitern, die als elektrische , das heißt als positive und negative, Anschlüsse erreicht werden, dass eine verbesserte Ausnutzung des Bauraums der Batteriezelle möglich wird. Durch den Wegfall des bisher üblichen Überlappungsbereichs der Elektrodenfahnen und der Ableiter kann der dadurch frei gewordene Bauraum entweder zur Vergrößerung der Kapazität der Batteriezelle bei gleichen Abmessungen oder zur Verringerung der Abmessungen der Batteriezelle bei gleicher Kapazität genutzt werden.

In Stumpfnähten verlaufen zudem die Kraftlinien mit relativ gleichmäßiger Spannungsverteilung, wodurch Spannungsspitzen vermieden werden können und wodurch auch die mechanische Stabilität gut ist, da es zu keiner relativen Verschiebung der Teile gegeneinander bei einer äußeren Krafteinwirkung kommt.

Dickenunterschiede zwischen Elektrodenfahnen und Ableiter können zu einem gewissen Grad ausgeglichen werden. Dabei ist eine symmetrische Anordnung des dünneren Bauteils zum dickeren Bauteil zu bevorzugen. Wenn eine geringere notwendige dynamische Festigkeit möglich ist, ist eine asymmetrische Anordnung der Elektrodenfahnen zum Ableiter ebenfalls möglich.

Die erfindungsgemäße Batteriezelle wird durch stirnseitige Verbindung mittels Laserstrahlschweißen oder Elektronenstrahschweißen hergestellt. Gerade für eine Großserienproduktion ist die Möglichkeit der alternativen Wahl zwischen Elektronenstrahlschweißen oder Laserstrahlschweißen, welches für die erfindungsgemäße Herstellung der Stumpfstoß-Schweißnaht zwischen den Elektrodenfahnen und dem Ableiter gleich gut einsetzbar ist, von Vorteil. Weiterhin können auch andere Schweißverfahren wie Metall-Inertgas-Schweißen (MIG), Wolfram-Inertgasschweißen (WIG) und/oder Plasma-Schweißen angewandt werden.

In einer Ausgestaltung der erfindungsgemäßen Batteriezelle ist die Schweißnaht zur stirnseitigen Verbindung der Elektrodenfahnen mit dem Ableiter einseitig oder beidseitig ausgebildet.

Aufgrund der elektrischen und thermischen Anforderungen der Kontaktierung ist es zwingend notwendig, dass alle Elektrodenfahnen an den Ableiter angebunden werden. Dazu kann, je nach Dickenverhältnis und Gesamtdicke der Fügepartner, ein einseitiges Durchschweißen oder ein beidseitiges Verschweißen vorgesehen sein. Beim beidseitigen Verschweißen sollten sich die beiden Schweißwurzeln überlagern, um nicht kontaktierte Fahnen zu vermeiden.

In einer Ausgestaltung der erfindungsgemäßen Batteriezelle kann die Batteriezelle eine Schutzhülle aufweisen, in der der Stapel zusammen mit einem Elektrolyten angeordnet ist, wobei die Schweißnaht zur stirnseitigen Verbindung der Elektrodenfahnen mit den Ableitern innerhalb der Schutzhülle angeordnet ist.

Die Schutzhülle kann von einer Folie oder einem Folienbeutel gebildet werden, welche aus Isoliermaterial oder mehrschichtig aus Metallfolie mit umgebenden Isoliermaterial bestehen kann. Die Bestandteile der Batteriezelle zusammen mit dem Elektrolyten sind dicht in die Schutzhülle eingeschlossen. Ein solcher Aufbau der Batteriezelle als sogenannte Pouchoder Coffeebag-Zelle ist sehr einfach und effizient, da der Stapel der Elektroden und Separatoren nach dem Verschweißen mit den Ableitern beispielsweise in einen Folienbeutel oder zwei gegeneinander gelegte Folien unterhalb und oberhalb des Stapels eingeschweißt werden kann. Der Aufbau lässt sich somit einfach und effizient isolieren und fluiddicht einsiegeln, sodass in dem Beutel beziehungsweise zwischen die Folien eingefüllter Elektrolyt sicher und zuverlässig in diesem Bereich verbleibt.

In einer Ausgestaltung der erfindungsgemäßen Batteriezelle können die Ableiter aus der Schutzhülle herausragen.

Es ist jeweils die Schweißnaht zur Verbindung der Elektrodenfahnen mit den Ableitern innerhalb der Schutzhülle angeordnet und nur der für den weiteren elektrischen Anschluss der Batteriezelle benötigte Bereich der Ableiter ragt aus der Schutzhülle heraus. Auf diese Weise ist die Schweißnaht gegen äußere Einflüsse gut geschützt. Die außerhalb der Schutzhülle liegenden Bereiche der Ableiter können beim Aufstapeln zu einer Batterie aus den Batteriezellen mit entsprechenden Stromschienen verbunden werden, um die einzelnen Batteriezellen parallel und/oder seriell miteinander zu verschalten.

In einer Ausgestaltung der erfindungsgemäßen Batteriezelle sind die Elektrodenfahnen in Gruppen mit dem Ableiter stirnseitig verbunden.

Diese Ausgestaltung kann insbesondere dann vorteilhaft sein, wenn der Dickenunterschied zwischen dem Folienstapel und dem Ableiter zu groß wird, kann der Dickenausgleich durch die Schweißnähte weniger gut ausgeglichen werden. Deswegen kann es vorteilhaft sein, den Elektrodenfahnenstapel einer Polarität so auszubilden, dass dieser in wenigstens zwei Gruppen in wenigstens zwei verschiedenen Bereichen aus dem Stapel der Elektrode ragt und dass jede der Gruppen mit einem anderen Bereich des jeweiligen Ableiters verschweißt ist. Der Wärmeeintrag in die vergleichsweise empfindliche Batteriezelle wird zudem bei sehr guter Schweißung und damit sehr guter elektrischer Verbindung der Elektrodenfahnen mit dem Ableiter entsprechend reduziert. Außerdem erlaubt der Aufbau die Verarbeitung einer entsprechend größeren Anzahl an Elektroden in jeder Batteriezelle, da die Elektrodenfahnen der Elektroden in einzelnen Gruppen mit dem Ableiter verschweißt werden und damit insgesamt eine größere Anzahl an einzelnen Elektrodenfahnen sicher und zuverlässig mit dem Ableiter verschweißt werden kann. Die Leistungsdichte einer aus den Batteriezellen aufgebauten Batterie kann so erhöht werden.

In einer Ausgestaltung der erfindungsgemäßen Batteriezelle ist die Batteriezelle eine Li-lonen- oder eine Li-Polymer-Batterie. Insbesondere im Pouch-Format werden diese Arten der Batteriezellen in vielfältigen Anwendungen eingesetzt.

Ein weiterer Gegenstand der vorliegenden Erfindung ist ein Verfahren zur Herstellung einer Batteriezelle umfassend die Schritte:
- Bereitstellen eines Stapels von positiven und negativen Elektroden sowie dazwischen angeordneten Separatoren, wobei die Elektroden jeweils Elektrodenfahnen aufweisen,
- Verschweißen der Elektrodenfahnen der positiven und negativen Elektroden jeweils mit mindestens einem positiven und mindestens einem negativen Ableiter,
- Einsetzen des Stapels mit den an den Elektrodenfahnen angeschweißten Ableitern in eine Schutzhülle derart, dass die Schweißnaht zwischen den Elektrodenfahnen und den Ableitern innerhalb der Schutzhülle angeordnet werden und die Ableiter aus der Schutzhülle herausragen,
- Einfüllen eines Elektrolyten, und
- Versiegeln der Schutzhülle,
   wobei die Elektrodenfahnen mit dem Ableiter jeweils stirnseitig durch Stumpfstoß-Schweißen verbunden werden, wobei die stirnseitige Verbindung mittels Laserstrahlschweißen oder Elektronenstrahl- WIG-, MIG- oder Plasma-Schweißen hergestellt wird.

Vorteilhafterweise kann mit dem erfindungsgemäßen Schritt des Stumpfstoß-Schweißens zur Verbindung der Elektrodenfahnen mit dem beziehungsweise mit den Ableitern, die als elektrische , das heißt als positive und negative, Anschlüsse erreicht werden, dass eine verbesserte Ausnutzung des Bauraums der Batteriezelle möglich wird. Durch den Wegfall des bisher üblichen Überlappungsbereichs der Elektrodenfahnen und der Ableiter kann der dadurch frei gewordene Bauraum entweder zur Vergrößerung der Kapazität der Batteriezelle bei gleichen Abmessungen oder zur Verringerung der Abmessungen der Batteriezelle bei gleicher Kapazität genutzt werden.

In Stumpfnähten verlaufen zudem die Kraftlinien mit relativ gleichmäßiger Spannungsverteilung, wodurch Spannungsspitzen vermieden werden können und wodurch auch die mechanische Stabilität gut ist, da es zu keiner relativen Verschiebung der Teile gegeneinander bei einer äußeren Krafteinwirkung kommt.

Dickenunterschiede zwischen Elektrodenfahnen und Ableiter können zu einem gewissen Grad ausgeglichen werden. Dabei ist eine symmetrische Anordnung des dünneren Bauteils zum dickeren zu bevorzugen. Wenn eine geringere notwendige dynamische Festigkeit möglich ist, ist eine asymmetrische Anordnung der Elektrodenfahnen zum Ableiter ebenfalls möglich.

Es ist weiterhin Gegenstand der vorliegenden Erfindung, dass die Batteriezelle oder das Verfahren zur Herstellung einer Batteriezelle gemäß der vorliegenden Erfindung zum Ausbilden eines Zellstapels als Traktionsbatterie in einem zumindest teilweise elektrisch angetriebenen Fahrzeug Verwendung findet.

Die erfindungsgemäße Batteriezelle lässt sich einfach und effizient aufbauen und ermöglicht eine vergleichsweise verbesserte Leistungsfähigkeit oder einen verminderten Bauraum in jeder Batteriezelle. Damit lassen sich einfach und effizient sehr leistungsfähige Batterien kostengünstig herstellen. Dies ist insbesondere für den Einsatz in Traktionsbatterien für zumindest teilweise elektrisch angetriebene Fahrzeuge von besonderem Vorteil, da hier aufgrund der erwarteten Stückzahlen und der mit der Batterie verbundenen Kosten Vorteile hinsichtlich effektiver Herstellung, hoher Leistungsdichte und sicherem und zuverlässigem Aufbau besonders wichtig sind.

Es gibt eine Vielzahl von Möglichkeiten, die Batteriezelle auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnungen und den dazugehörigen Beschreibungen näher erläutert werden. In den Zeichnungen zeigt:
**Fig. 1** in einer stark schematisierten Darstellung eine gattungsgemäße Batteriezelle in einer allgemeinen Ausgestaltung,
**Fig. 2** in einer stark schematisierten Darstellung als Schnittansicht eine Anordnung der Verbindung der Elektrodenfahnen eines Elektrodenstapels mit einem Ableiter gemäß dem Stand der Technik,
**Fig. 3** in einer stark schematisierten Darstellung als Schnittansicht eine Anordnung der Verbindung der Elektrodenfahnen eines Elektrodenstapels mit einem Ableiter gemäß der vorliegenden Erfindung,
**Fig. 4** in einer stark schematisierten Darstellung als Schnittansicht eine Anordnung der Verbindung der Elektrodenfahnen eines Elektrodenstapels mit einem Ableiter gemäß einer weiteren Ausgestaltung der vorliegenden Erfindung,
**Fig. 5** in einer stark schematisierten Darstellung als Detailansicht eine Anordnung der Verbindung der Elektrodenfahnen eines Elektrodenstapels mit einem Ableiter gemäß einer weiteren Ausgestaltung vorliegenden Erfindung, und
**Fig. 6** in einer stark schematisierten Darstellung als Detailansicht eine Anordnung der Verbindung der Elektrodenfahnen eines Elektrodenstapels mit einem Ableiter gemäß einer weiteren Ausgestaltung vorliegenden Erfindung.

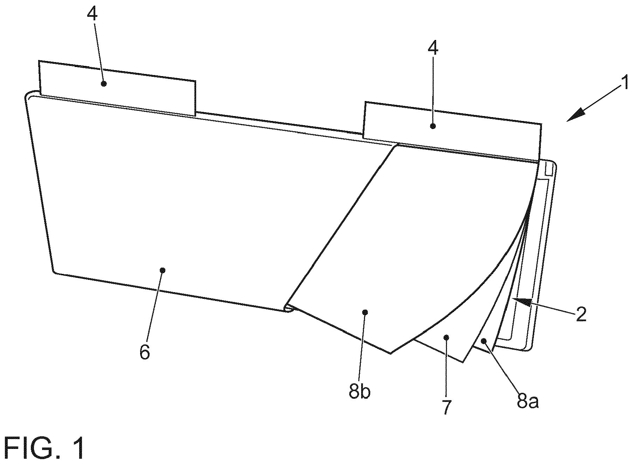

In Figur 1 ist eine Batteriezelle 1 mit einem Stapel 2 von positiven und negativen Elektroden 8a, 8b sowie dazwischen angeordneten Separatoren 7, wobei die Elektroden 8 jeweils mit mindestens einem positiven und mindestens einem negativen Ableiter 4 verschweißt sind. Die Batteriezelle 1 weist eine Schutzhülle 6 auf, in der der Stapel 2 üblicherweise zusammen mit einem Elektrolyten angeordnet ist. Die Ableiter 4 ragen aus der Schutzhülle 6 teilweise heraus. Die Batteriezelle 1 kann eine Li-lonen- oder eine Li-Polymer-Batterie sein.

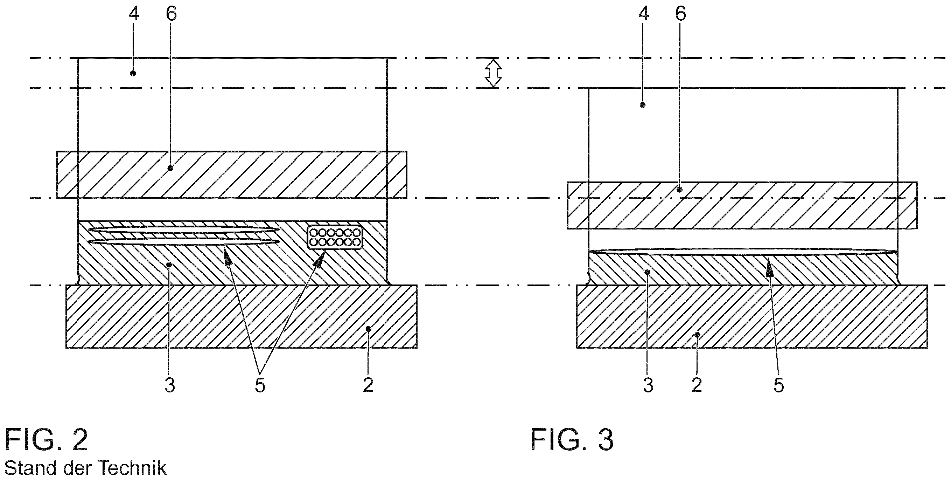

In Figur 2 ist schematisch als eine Detailansicht einer gattungsgemäßen Batteriezelle 1 die übliche Anordnung der Verbindung 5 der Elektrodenfahnen 3 eines Elektrodenstapels 2 mit einem Ableiter 4 gemäß dem Stand der Technik gezeigt. Ausgehend von dem Elektrodenstapel 2 erstrecken sich die Elektrodenfahnen 3 in Richtung des Ableiters 4, und sie sind durch eine oder mehrere Schweißnähte 5 mit dem Ableiter 4 verbunden. Der Ableiter 4 erstreckt sich durch eine hier nur stark schematisiert dargestellte Schutzhülle 6 nach außen. Gemäß der Anordnung des Standes der Technik ist ein Überlappungsbereich vorgesehen, in dem sich die Elektrodenfahnen 3 mit dem Ableiter 4 überlappen und in dem die Schweißnaht beziehungsweise die Schweißnähte 5 hergestellt ist. Es handelt sich mithin um einen Überlappstoß, bei dem die beiden zu verschweißenden Teile übereinander liegend angeordnet sind.

In Figur 3 ist demgegenüber schematisch als eine Detailansicht einer gattungsgemäßen Batteriezelle 1 die neue Anordnung der Verbindung 5 der Elektrodenfahnen 3 eines Elektrodenstapels 2 mit einem Ableiter 4 gemäß der vorliegenden Erfindung in einer bevorzugten Ausgestaltung gezeigt. Ausgehend von dem Elektrodenstapel 2 erstrecken sich die Elektrodenfahnen 3 in Richtung des Ableiters 4, und sie sind durch eine Schweißnaht 5 mit dem Ableiter 4 verbunden. Der Ableiter 4 erstreckt sich durch eine hier nur stark schematisiert dargestellte Schutzhülle 6 nach außen. Gemäß der vorliegenden Erfindung ist die Scheißverbindung der Elektrodenfahnen 3 mit dem Ableiter 4 eine Stumpfstoß-Schweißnaht 5. Mit anderen Worten ist erfindungsgemäß kein Überlappungsbereich zwischen den zu verbindenden Teilen vorgesehen. Die zu verbindenden Teile liegen nicht übereinander sondern sie sind stirnseitig gegenüberliegend in einer Ebene angeordnet.

Bei einem Vergleich der Anordnungen der Figur 2 mit der erfindungsgemäßen Anordnung der Figur 3 wird nun deutlich, dass eine Verringerung des Bauraums der Batteriezelle erreicht wird. Durch den Wegfall des bisher als zwingend angesehen Überlappungsbereichs zwischen den Elektrodenfahnen 3 und dem Ableiter 4 kann entweder der benötigte Bauraum bei gleicher Kapazität der Batteriezelle verringert werden oder der Bauraum, der bisher durch den Überlappungsbereich eingenommen wurde kann für leistungstragende Bauteile wie Elektroden und Elektrolyt genutzt werden, so dass die Batteriezelle eine größere Kapazität aufweisen kann. Gleichzeitig kann durch das erfindungsgemäße Stumpfstoßschweißen eine Prozesserleichterung erzielt werden, da die Schweißverbindung sowohl einseitig mittels Durchschweißen als auch beidseitig erfolgen kann und neben dem Ultraschallschweißen nun auch Laserstrahlschweißen möglich ist zur Herstellung der Verbindung zwischen den Elektrodenfahnen 3 und einem Ableiter 4. Die Kraftlinien bei einer Stumpfstoßnaht verlaufen mit relativ gleichmäßiger Spannungsverteilung, so dass zudem Spannungsspitzen vermieden werden.

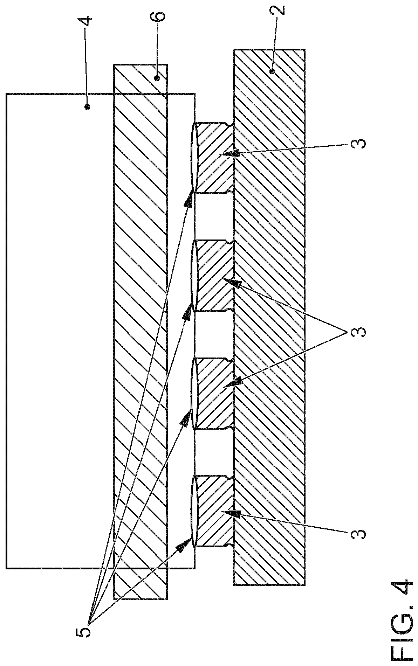

In Figur 4 ist in einer stark schematisierten Darstellung als Schnittansicht eine Anordnung der Verbindung 5 der Elektrodenfahnen 3 eines Elektrodenstapels 2 mit einem Ableiter 4 gemäß einer weiteren Ausgestaltung der vorliegenden Erfindung gezeigt. Auch hier sind die Verbindungen 5 mittels Stumpfstoßschweißen zwischen den Stirnseiten der Elektrodenfahnen 3 und dem Ableiter 4 hergestellt. In der gezeigten Ausgestaltung sind im Unterschied zur Ausgestaltung der Figur 3 die Elektrodenfahnen in Gruppen angeordnet. Hierdurch lässt sich wiederum eine Prozessvereinfachung erzielen.

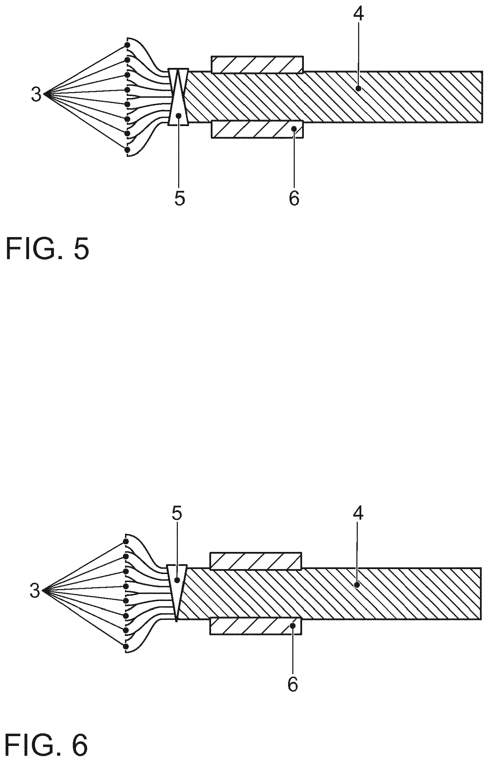

In Figur 5 ist in einer stark schematisierten Darstellung als Querschnitt-Detailansicht eine Anordnung der Verbindung 5 der Elektrodenfahnen 3 eines Elektrodenstapels mit einem Ableiter 4 gemäß einer weiteren Ausgestaltung vorliegenden Erfindung gezeigt. Eine Gruppe von Elektrodenfahnen 3 ist jeweils stirnseitig mit dem Ableiter 4 mittels Stumpfstoßschweißen 5 verbunden. Das Stumpfstoßschweißen wurde hier beidseitig durchgeführt, so dass eine gut zu steuernde Prozessführung mit Laser- oder Elektronenstrahlschweißen, MIG, WIG und/oder Plasma-Schweißen ermöglicht wird. Beim beidseitigen Verschweißen sollten sich die beide Schweißwurzeln überlagern, um nicht kontaktierte Fahnen zu vermeiden.

In Figur 6 ist in einer stark schematisierten Darstellung als Querschnitt-Detailansicht eine Anordnung der Verbindung 5 der Elektrodenfahnen 3 eines Elektrodenstapels mit einem Ableiter 4 gemäß einer weiteren Ausgestaltung vorliegenden Erfindung gezeigt. Auch hier ist eine Gruppe von Elektrodenfahnen 3 stirnseitig mittels Stumpfstoßschweißen 5 mit einem Ableiter 4 verbunden. Das Stumpfstoßschweißen erfolgt in der vorliegenden Ausgestaltung nur einseitig und bildet eine Durchschweißnaht 5.

### Bezugszeichenliste

- 1: Batteriezelle
- 2: Stapel von Elektroden
- 3: Elektrodenfahnen
- 4: Ableiter
- 5: Schweißnaht
- 6: Schutzhülle
- 7: Separatoren
- 8: Elektroden

## Patentansprüche

1. Batteriezelle (1) mit einem Stapel (2) von positiven und negativen Elektroden (8a, 8b) sowie dazwischen angeordneten Separatoren (7), wobei die Elektroden (8) jeweils Elektrodenfahnen (3) aufweisen, welche jeweils mit mindestens einem positiven und mindestens einem negativen Ableiter (4) verschweißt sind, wobei die Elektrodenfahnen (3) mit dem Ableiter (4) jeweils stirnseitig durch eine Stumpfstoß-Schweißnaht (5) verbunden sind, wobei die stirnseitige Verbindung mittels Laserstrahlschweißen oder Elektronenstrahl-, WIG-, MIG- oder Plasma-Schweißen hergestellt ist, **dadurch gekennzeichnet, dass** die zu verbindenden Teile, nämlich der Ableiter (4) und die Elektrodenfahnen (3) stirnseitig gegenüberliegend in einer Ebene angeordnet sind.

2. Batteriezelle gemäß dem vorstehenden Anspruch 1, **dadurch gekennzeichnet, dass** die Schweißnaht (5) zur stirnseitigen Verbindung der Elektrodenfahnen (3) mit dem Ableiter (4) einseitig oder beidseitig ist.

3. Batteriezelle gemäß einem der vorstehenden Ansprüche, **dadurch gekennzeichnet, dass** die Elektrodenfahnen (3) in Gruppen mit dem Ableiter (4) stirnseitig verbunden sind.

4. Batteriezelle gemäß einem der vorstehenden Ansprüche, wobei die Batteriezelle (1) eine Schutzhülle (6) aufweist, in der der Stapel (2) zusammen mit einem Elektrolyten angeordnet ist, **dadurch gekennzeichnet, dass** die Schweißnaht (5) zur stirnseitigen Verbindung der Elektrodenfahnen (3) mit den Ableitern (4) innerhalb der Schutzhülle (6) angeordnet ist.

5. Batteriezelle gemäß Anspruch 4, **dadurch gekennzeichnet, dass** die Ableiter (4) aus der Schutzhülle (6) herausragen.

6. Batteriezelle gemäß Anspruch 1, **dadurch gekennzeichnet, dass** die Batteriezelle (1) eine Li-lonen- oder eine Li-Polymer-Batterie ist.

7. Verfahren zur Herstellung einer Batteriezelle gemäß einem der Ansprüche 1 bis 6, umfassend die Schritte:
- Bereitstellen eines Stapels (2) von positiven und negativen Elektroden (8a, 8b) sowie dazwischen angeordneten Separatoren (7), wobei die Elektroden (8) jeweils Elektrodenfahnen (3) aufweisen,
- Verschweißen der Elektrodenfahnen (3) der positiven und negativen Elektroden (5a, 5b) jeweils mit mindestens einem positiven und mindestens einem negativen Ableiter (4),
- Einsetzen des Stapels (2) mit den an den Elektrodenfahnen (3) angeschweißten Ableitern (4) in eine Schutzhülle (6) derart, dass die Schweißnaht (5) zwischen den Elektrodenfahnen (3) und den Ableitern (4) innerhalb der Schutzhülle (6) angeordnet werden und die Ableiter (4) aus der Schutzhülle (6) herausragen,
- Einfüllen eines Elektrolyten, und
- Versiegeln der Schutzhülle (6),
wobei die Elektrodenfahnen (3) mit dem Ableiter (4) jeweils stirnseitig durch Stumpfstoß-Schweißen verbunden werden, **dadurch gekennzeichnet, dass** die stirnseitige Verbindung mittels Laserstrahlschweißen oder Elektronenstrahl-, WIG-, MIG- oder Plasma-Schweißen hergestellt wird.

8. Verwendung der Batteriezelle (1) oder des Verfahrens zur Herstellung einer Batteriezelle (1) gemäß einem der vorstehenden Ansprüche zum Ausbilden eines Zellstapels als Traktionsbatterie in einem zumindest teilweise elektrisch angetriebenen Fahrzeug.

## Claims

1. Battery cell (1) comprising a stack (2) of positive and negative electrodes (8a, 8b) and separators (7) arranged in between, wherein the electrodes (8) have in each case electrode lugs (3), which are in each case welded to at least one positive and at least one negative collector (4), wherein the electrode lugs (3) are connected to the collector (4) in each case at the end face by means of a butt-joint weld seam (5), wherein the end-face connection is created by means of laser beam welding or electron beam welding, TIG welding, MIG welding or plasma welding, **characterized in that** the parts to be connected, specifically the collector (4) and the electrode lugs (3), are arranged with their end faces opposite one another in one plane.

2. Battery cell according to the preceding claim 1, **characterized in that** the weld seam (5) for the end-face connection of the electrode lugs (3) to the collector (4) is on one side or on both sides.

3. Battery cell according to one of the preceding claims, **characterized in that** the electrode lugs (3) are connected by their end faces to the collector (4) in groups.

4. Battery cell according to one of the preceding claims, wherein the battery cell (1) has a protective sleeve (6), in which the stack (2) is arranged together with an electrolyte, **characterized in that** the weld seam (5) for the end-face connection of the electrode lugs (3) to the collectors (4) is arranged inside the protective sleeve (6).

5. Battery cell according to Claim 4, **characterized in that** the collectors (4) project out of the protective sleeve (6).

6. Battery cell according to Claim 1, **characterized in that** the battery cell (1) is a lithium-ion battery or a lithium-polymer battery.

7. Method for producing a battery cell according to one of Claims 1 to 6, comprising the steps of:
- providing a stack (2) of positive and negative electrodes (8a, 8b) and separators (7) arranged in between, wherein the electrodes (8) have in each case electrode lugs (3),
- welding electrode lugs (3) of the positive and negative electrodes (5a, 5b) in each case to at least one positive and at least one negative collector (4),
- inserting the stack (2) with the collectors (4) welded to the electrode lugs (3) into a protective sleeve (6) in such a way that the weld seam (5) between the electrode lugs (3) and the collectors (4) are arranged inside the protective sleeve (6) and the collectors (4) project out of the protective sleeve (6),
- filling with an electrolyte, and
- sealing the protective sleeve (6),
wherein the electrode lugs (3) are connected to the collector (4) in each case at the end face by means of butt-joint welding, **characterized in that** the end-face connection is created by means of laser beam welding or electron beam welding, TIG welding, MIG welding or plasma welding.

8. The use of the battery cell (1) or the method for producing a battery cell (1) according to one of the preceding claims for forming a cell stack as a traction battery in an at least partially electrically powered vehicle.

## Revendications

1. Elément de batterie (1), comprenant un empilement (2) d'électrodes positives et négatives (8a, 8b) ainsi que de séparateurs (7) disposés entre celles-ci, les électrodes (8) présentant respectivement des pattes d'électrode (3) qui sont respectivement soudées à au moins un éclateur (4) positif et à au moins un éclateur négatif, les pattes d'électrode (3) étant reliées à l'éclateur (4) respectivement sur la face frontale par un joint de soudure bout à bout (5), la liaison sur la face frontale étant établie par soudage au laser ou par soudage par faisceau d'électrons, par soudage WIG, par soudage MIG ou par soudage au plasma,
**caractérisé en ce que** les parties à relier, notamment l'éclateur (4) et les pattes d'électrode (3), sont disposées dans un plan à l'opposé les uns des autres sur la face frontale.

2. Elément de batterie selon la revendication précédentes 1, **caractérisé en ce que** le joint de soudure (5) servant à la liaison sur la face frontale des pattes d'électrode (3) à l'éclateur (4) est unilatéral ou bilatéral.

3. Elément de batterie selon l'une quelconque des revendications précédentes, **caractérisé en ce que** les pattes d'électrode (3) sont reliées par groupes à l'éclateur (4) sur la face frontale.

4. Elément de batterie selon l'une quelconque des revendications précédentes, dans lequel l'élément de batterie (1) présente une enveloppe protectrice (6) dans laquelle l'empilement (2) est disposé avec un électrolyte, **caractérisé en ce que** le joint de soudure (5) servant à la liaison sur la face frontale des pattes d'électrode (3) aux éclateurs (4) est disposé à l'intérieur de l'enveloppe protectrice (6).

5. Elément de batterie selon la revendication 4, **caractérisé en ce que** les éclateurs (4) dépassent de l'enveloppe protectrice (6).

6. Elément de batterie selon la revendication 1, **caractérisé en ce que** l'élément de batterie (1) est une batterie Li-ion ou une batterie Li-polymère.

7. Procédé de fabrication d'un élément de batterie selon l'une quelconque des revendications 1 à 6, comprenant les étapes consistant à :
- fournir un empilement (2) d'électrodes positives et négatives (8a, 8b) ainsi que de séparateurs (7) disposés entre celles-ci, les électrodes (8) présentant respectivement des pattes d'électrode (3),
- souder les pattes d'électrode (3) des électrodes positives et négatives (5a, 5b) respectivement à au moins un éclateur positif (4) et à au moins un éclateur négatif,
- insérer l'empilement (2) pourvu des éclateurs (4) soudés aux pattes d'électrode (3) dans une enveloppe protectrice (6) de telle sorte que le joint de soudure (5) sont disposés entre les pattes d'électrode (3) et les éclateurs (4) à l'intérieur de l'enveloppe protectrice (6) et les éclateurs (4) dépassent de l'enveloppe protectrice (6),
- verser un électrolyte, et
- sceller l'enveloppe protectrice (6),
les pattes d'électrode (3) étant reliées à l'éclateur (4) respectivement sur la face frontale par soudage bout à bout,
**caractérisé en ce que** la liaison sur la face frontale est établie par soudage au laser ou par soudage par faisceau d'électrons, par soudage WIG, par soudage MIG ou par soudage au plasma.

8. Utilisation de l'élément de batterie (1) ou du procédé de fabrication d'un élément de batterie (1) selon l'une quelconque des revendications précédentes pour réaliser un empilement d'éléments sous forme de batterie de traction dans un véhicule au moins partiellement électrique.
